# EUROPEAN PATENT APPLICATION

(11) **EP 2 940 357 A1**
(43) Date of publication of application: **04.11.2015**
(21) Application number: 14166573.7
(22) Date of filing: 30.04.2014
(51) Int. Cl.: F16K 11/085, F16K 27/06

(54) **Fluid control valve**

(71) Applicant: Esbe AB, 330 21 Reftele (SE)
(72) Inventor: Davidsson, Jonas, 331 51 VÄRNAMO (SE)
(74) Representative: Ungsten, Magnus Torbjörn

(57) **Abstract**

The present invention relates to a fluid control valve comprising a valve chamber (5) having at least a first, a second and a third port arrangement (11, 13, 15) distributed around a circumferential chamber wall (19) of the valve chamber (5), at least three connecting conduits (21, 23, 25, 27), each of which is fluidly connected to the valve chamber (5) by a respective one of said port arrangements (11, 13, 15), and a rotor (7) which is rotatably seated inside the valve chamber (5) and rotatable around a rotor center axis (10). The rotor (7) comprises a first fluid passage (29) arranged at a first level (L1) as seen along the rotor center axis (10), and a second fluid passage (31) which is separated from the first fluid passage (29) and arranged at a second level (L2) as seen along the rotor center axis (10), wherein said second level (L2) is different from said first level (L1).

## Description

### Field of the Invention

The present invention relates to a fluid control valve comprising a valve chamber having at least a first, a second and a third port arrangement distributed around a circumferential chamber wall of the valve chamber, at least three connecting conduits, each of which is fluidly connected to the valve chamber by a respective one of said port arrangements, and a rotor which is rotatably seated inside the valve chamber and rotatable around a rotor center axis.

### Background of the Invention

A valve of this type may be used in a domestic heating and/or cooling system.

US 1,990,773 discloses a valve having a valve chamber with one inlet port and three outlet ports. A rotatable valve member provided with two separate bores is arranged within the valve chamber. The first bore provides a first passageway when the valve member assumes a first position and the second bore provides a second passageway when the valve member is rotated to a second position.

A drawback of this valve is that the number of possible flow paths may be regarded as limited. The flexibility of the valve may thus be regarded as relatively poor.

### Summary of the Invention

It is an object of the present invention to overcome the above described drawback, and to provide an improved valve, which provides for several fluid path combinations within a limited range of rotation of the valve rotor.

This and other objects that will be apparent from the following summary and description are achieved by a fluid control valve according to the appended claims.

According to one aspect of the present disclosure there is provided a fluid control valve comprising a valve chamber having at least a first, a second and a third port arrangement distributed around a circumferential chamber wall of the valve chamber, at least three connecting conduits, each of which is fluidly connected to the valve chamber by a respective one of said port arrangements, and a rotor which is rotatably seated inside the valve chamber and rotatable around a rotor center axis, wherein the rotor comprises a first fluid passage arranged at a first level as seen along the rotor center axis, and a second fluid passage which is separated from the first fluid passage and arranged at a second level as seen along the rotor center axis, wherein said second level is different from said first level.

This valve enables more flow path combinations within a certain range of rotation of the valve rotor compared to a conventional valve which has fluid passages arranged at one single level. By using fluid passages which are separated from each another and arranged at different levels a large number of possible fluid path combinations within a limited rotation of the valve rotor, such as e.g. 90°, may thus be achieved. Hence, a valve with high flexibility may be achieved. One such valve may thus replace two or more conventional valves. Each such level of the rotor may be arranged to have a different function compared to another level thereof. Furthermore, this valve enables to shift the direction of flow several times within a given range of rotation of the valve rotor.

According to one embodiment one of said port arrangements is blocked for fluid communication with said first fluid passage and open for fluid communication with said second fluid passage.

According to one embodiment one of said port arrangements is blocked for fluid communication with said second fluid passage and open for fluid communication with said first fluid passage.

According to one embodiment one of said port arrangements is open for fluid communication with each of said first and second fluid passages.

According to one embodiment one of said first and second fluid passages is configured to enable fluid communication between at least three port arrangements simultaneously. In this embodiment the valve rotor may thus open for fluid communication between three or more port arrangements simultaneously, which enables mixing of a first and a second flow of fluid.

According to one embodiment at least one of said first and second fluid passages is configured to enable mixing of a first and a second flow of fluid.

According to one embodiment the fluid control valve is intended for controlling flow of liquid in a heating and/or cooling system in a building.

According to one embodiment the valve chamber has four port arrangements distributed around a circumferential chamber wall of the valve chamber and four connecting conduits, each of which is fluidly connected to the valve chamber by a respective one of said four port arrangements.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 shows, in an exploded perspective view, a fluid control valve according to an embodiment of the present disclosure.
Fig. 2 shows, in a perspective view, sections of the valve shown in Fig. 1.
Figs. 3a-f illustrate a first operating state of the valve shown in Fig. 1.
Figs. 4a-f illustrate a second operating state of the valve shown in Fig. 1.
Figs. 5a-f illustrate a third operating state of the valve shown in Fig. 1.
Figs. 6a-f illustrate a fourth operating state of the valve shown in Fig. 1.

### Description of preferred embodiments

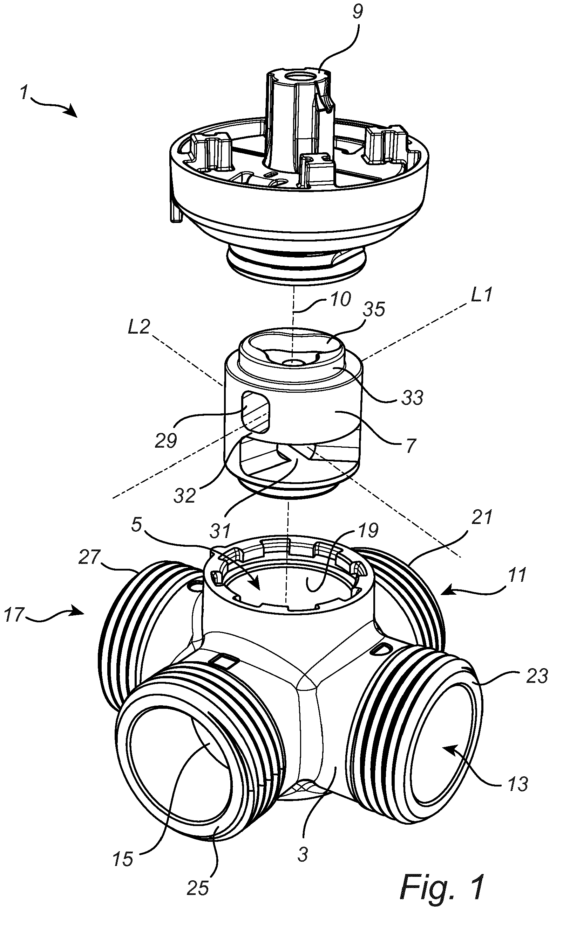

Fig. 1 illustrates a fluid control valve 1 according to an embodiment of the present disclosure. The fluid control valve 1 is shown in an exploded view to facilitate the illustration of different features thereof. The fluid control valve 1 is intended for controlling flow of liquid in a pipe system and may be used e.g. for controlling liquid flow in a heating and/or cooling system in a building. The fluid control valve 1 may be connected as a mixing valve to mix streams of fluid, as a diverting valve or as a combined mixing and diverting valve.

The fluid control valve 1 comprises a housing 3, defining a circular cylindrical valve chamber 5, a rotor 7 and an operating spindle 9 for operating the rotor 7. The operating spindle 9 is configured to be connected to a knob for manual valve control, or to an electronic controller for automatic valve control. To this end the rotor 7 is shaped to unrotatably engage with a driver of the operating spindle 9. The rotor 7 is rotatable around a rotor center axis 10.

The valve chamber 5 comprises four port arrangements 11, 13, 15, 17 distributed around a circumferential chamber wall 19 and four connecting conduits 21, 23, 25, 27. Each of the four connecting conduits 21, 23, 25, 27, which are arranged on equal height around the circumferential chamber wall 19, is fluidly connected to the valve chamber 5 by a respective one of the four port arrangements 11, 13, 15, 17. The first port arrangement 11 and the associated connecting conduit 21 are situated opposite to the third port arrangement 15 and the associated connecting conduit 25 and the second port arrangement 13 and the associated connecting conduit 23 are situated opposite to the fourth port arrangement 17 and the associated connecting conduit 27. The size of all four port arrangements 11, 13, 15, 17 is such that intact parts of the circumferential chamber wall 19 remain around all four port arrangements 11, 13, 15, 17.

The rotor 7 comprises a first fluid passage 29 arranged at a first level L1 as seen along the rotor center axis 10 and a second fluid passage 31 which is separated from the first fluid passage 29 by a separating wall 32 and arranged at a second level L2, which is located below the first level L1, as seen along the rotor center axis 10. The separating wall 32 is thus situated between the first and second levels L1, L2.

The rotor 7 is rotatably seated inside the chamber 5 of the valve housing 3 and is rotatable around the rotor center axis 10 between different operating positions to control fluid flow through the valve 1. As illustrated in Fig. 1 the overall shape of the rotor 7 is circular cylindrical. A top plateau 33 of the rotor 7 has an groove 35, shaped to unrotatably engage with a driver of the operating spindle 9 in order to enable manual or automatic control of the valve 1 by rotating the rotor 7 such that the four port arrangement openings 11, 13, 15, 17 are opened totally or partly or closed.

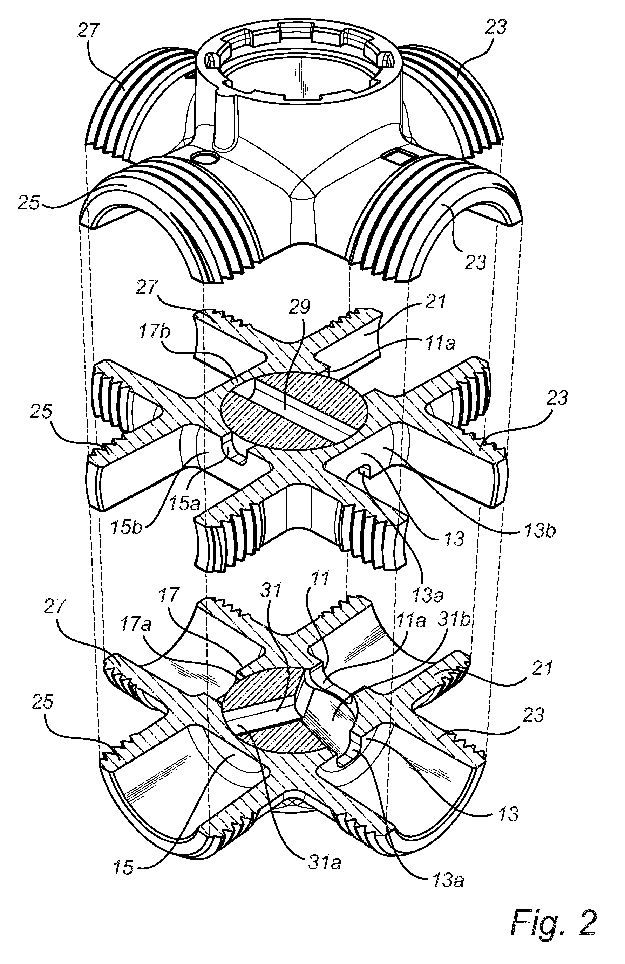

Fig. 2 shows cross sections of the valve 1 at the first and second levels L1, L2, respectively.

The first fluid passage 29 is formed by a channel with constant cross-section and is thus configured to enable fluid communication between two port arrangements.

The second fluid passage 31 has one narrow end 31 a and one wide end 31 b and is configured to enable fluid communication between two or three port arrangements.

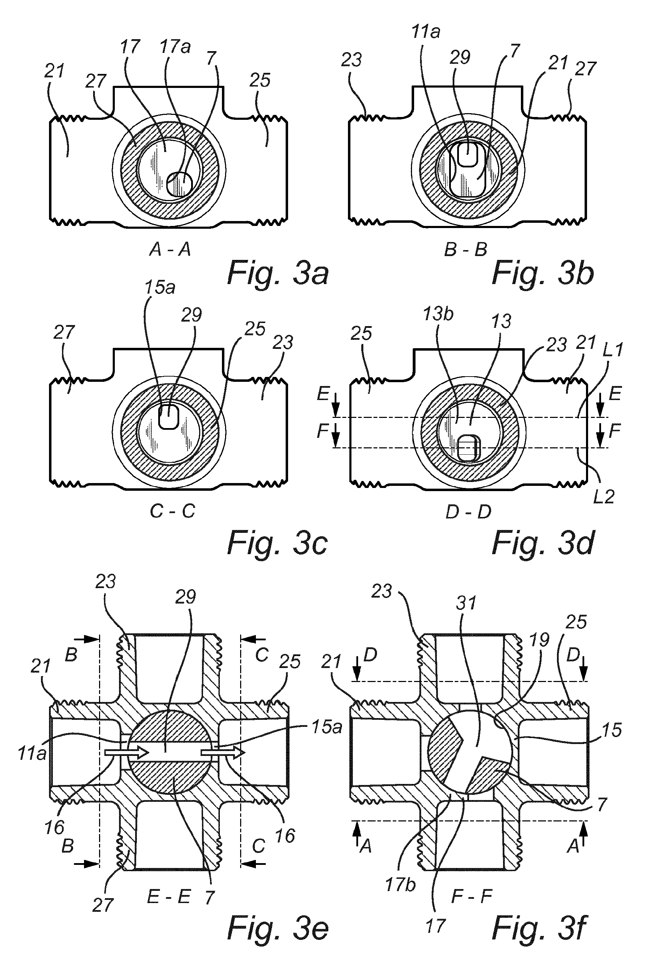

The fluid passages 29, 31 are thus configured to enable different flow paths through the valve 1. Since the rotor 7 has two fluid passages 29, 31, which are separated from each other and arranged at different levels L1, L2, a large number of fluid path combinations may be realized, as will be exemplified hereinafter with reference to Figs. 3a-6f.

Each port arrangement 11, 13, 15, 17 comprises an opening 11a, 13a, 15a, 17a, respectively, allowing fluid flow theretrough. Each port arrangement 11, 13, 15, 17 further comprises a wall 11b, 13b, 15b, 17b, respectively, configured to prevent fluid flow. The shape and location of the port arrangement openings 11a, 13a, 15a, 17a determines together with the shape and location of the fluid passages 29, 31 possible flow paths through the valve 1.

In this embodiment the first port arrangement opening 11a extends from the first level L1, i.e. the level at which the first fluid passage 29 is arranged, to the second level L2, i.e. the level at which the second fluid passage 31 is arranged. The first port arrangement 11 is thus configured to enable fluid communication between the first connecting conduit 21 and each of the first and second fluid passages 29, 31.

The opening 13a of the second port arrangement 13 is arranged at the second level L2, i.e. the level at which the second fluid passage 31 is arranged. The wall 13b of the second port arrangement 13 is arranged to block fluid communication between the second connecting conduit 13 and the first fluid passage 29. Fluid flow from the second connecting conduit 23 to the valve chamber 5 at the first level L1 is thus prevented by the wall 13b of the second port arrangement 13. The second port arrangement 13 is thus configured to enable fluid communication between the second connecting conduit 23 and the second fluid passage 31 whereas fluid communication between the second connecting conduit 23 and the first fluid passage 29 is prevented.

The opening 15a of the third port arrangement 15 is arranged at the first level L1, i.e. the level at which the first fluid passage 29 arranged. The wall 15b of the third port arrangement 15 is arranged to block fluid communication between the third connecting conduit 25 and the second fluid passage 31. Fluid flow from the third connecting conduit 25 to the valve chamber 5 at the second level L2 is thus prevented by the wall 15b of the third port arrangement 15. The third port arrangement 25 is thus configured to enable fluid communication between the third connecting conduit 25 and the first fluid passage 29 whereas fluid communication between the third connecting conduit 25 and the second fluid passage 31 is prevented.

The opening 17a of the fourth port arrangement 17 is arranged at the second level L2, i.e. the level at which the second fluid passage 31 is arranged. The wall 17b of the fourth port arrangement 17 is arranged to block fluid communication between the fourth connecting conduit 27 and the first fluid passage 29. Fluid flow from the fourth connecting conduit 27 to the valve chamber 5 at the first level L1 is thus prevented by the wall 17b of the fourth port arrangement 17. The fourth port arrangement 17 is thus configured to enable fluid communication between the fourth connecting conduit 27 and the second fluid passage 31 whereas fluid communication between the fourth connecting conduit 27 and the first fluid passage 29 is prevented.

In this embodiment, each of the first and third port arrangements 11, 13 is thus open for fluid communication with the first fluid passage 29 whereas each of the second and fourth port arrangements 15, 17 is blocked for communication with the first fluid passage 29. Furthermore, each of the first, second and fourth port arrangements 11, 13, 17 is open for fluid communication with the second fluid passage 31 whereas the third port arrangement 15 is blocked for fluid communication with the second fluid passage 31.

In the operating state shown in Fig. 2 the narrow end 31 a of the second fluid passage 31 is blocked by the third port arrangement wall 15b. However, the wide end 31 b of the second fluid passage 31 provides for fluid communication between the first and second connecting conduits 21, 23. Furthermore, the ends of the first fluid passage 29 are blocked by the second and fourth port arrangements 13, 17, respectively. In this operating position the second fluid passage 31 is thus open for fluid flow through the valve 1 whereas the first fluid passage 29 is blocked for fluid flow therethrough.

With reference to Figs. 3a-f, 4a-f, 5a-f and 6a-f the function of the fluid control valve 1 will be explained hereinafter.

Figs. 3a-f illustrate a first operating state of the valve 1. In this operating state the first fluid passage 29 is in fluid contact with each of the first and third port arrangement openings 11a, 15a. A fluid path between the first and the third connecting conduits 21, 25 is thus established, as illustrated by the arrows 16 in Fig. 3e. As shown in Fig 3f, fluid flow through the valve 1 via the second fluid passage 31 is blocked by the wall 17b of the fourth port arrangement 17. Furthermore, the third port arrangement 15 is not open for contact with the second fluid passage 31.

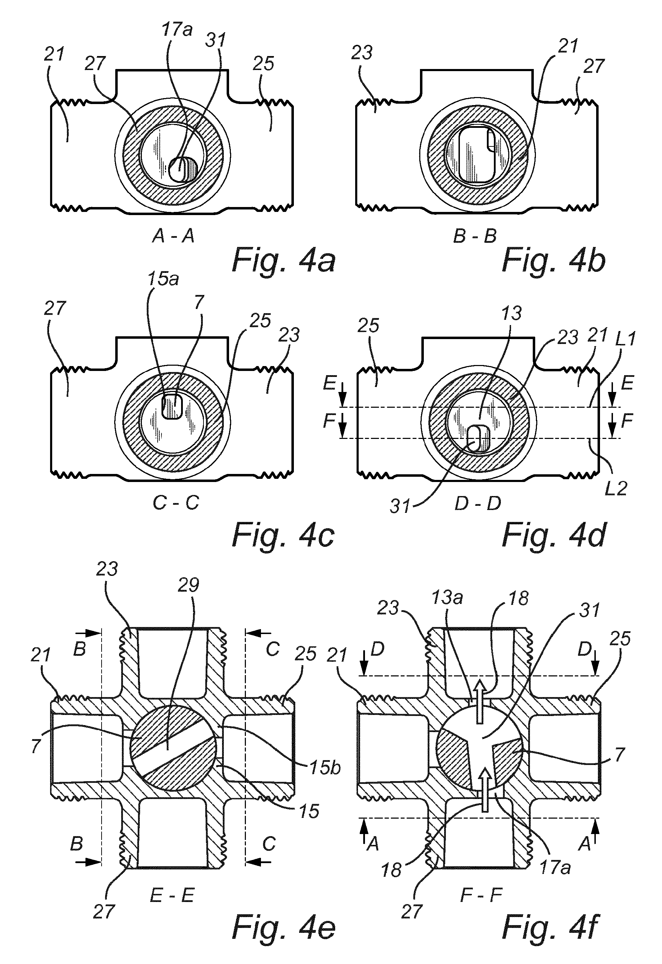

In Figs. 4a-f the rotor 7 has been rotated 30° from the rotor position of the first operating state. In this second operating state the second fluid passage 31 is in fluid contact with each of the second and fourth port arrangement openings 13a, 17a. A fluid path between the fourth and the second connecting conduits 27, 23 is thus established, as illustrated by the arrows 18 in Fig. 4f. As shown in Fig. 4e, fluid flow through the valve 1 via the first fluid passage 29 is blocked by the wall 15b of the third port arrangement 15.

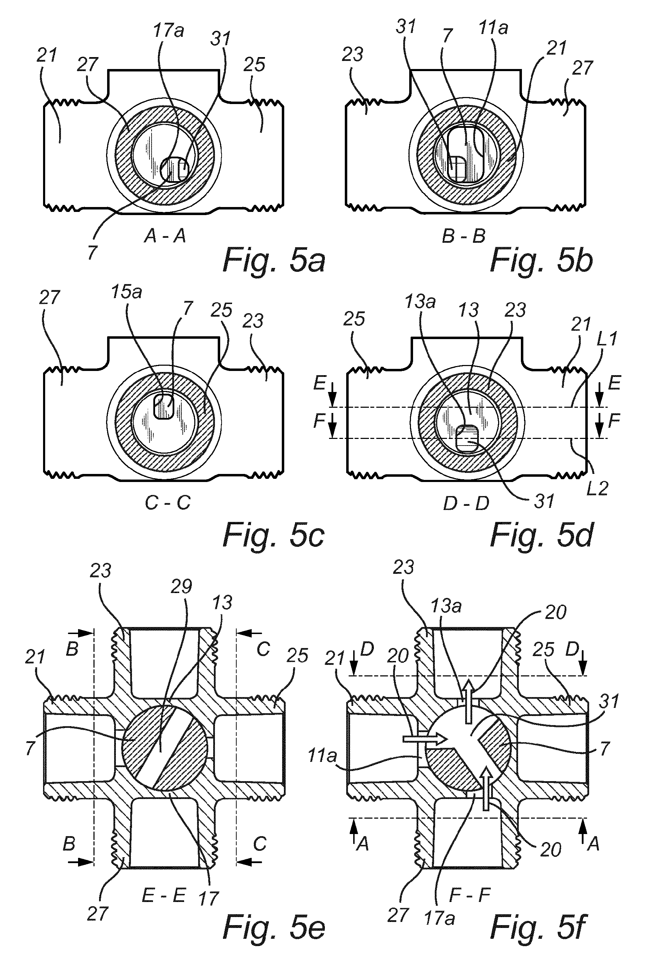

In Figs. 5a-f the rotor 7 has been rotated 60 ° from the rotor position of the first operating state. In this third operating state the second fluid passage 31 is in fluid contact with each of the first, second and fourth port arrangement openings 11a, 13a, 17a. A fluid path between the first, second and fourth connecting conduits 21, 23, 27 is thus established, as illustrated by the arrows 20 in Fig. 5f. In this operating state a fluid flow from the first connecting conduit 21 and a fluid flow from the fourth connecting conduit 27 are thus mixed. The mixed flow of fluid is received by the second connecting conduit 23 via the third port arrangement 13. In this operating state the second fluid passage 31 thus provides for fluid communication between three connecting conduits 21, 23, 27 simultaneously. As shown in Fig. 5e, fluid flow through the valve 1 via the first fluid passage 29 is not possible in this operating state.

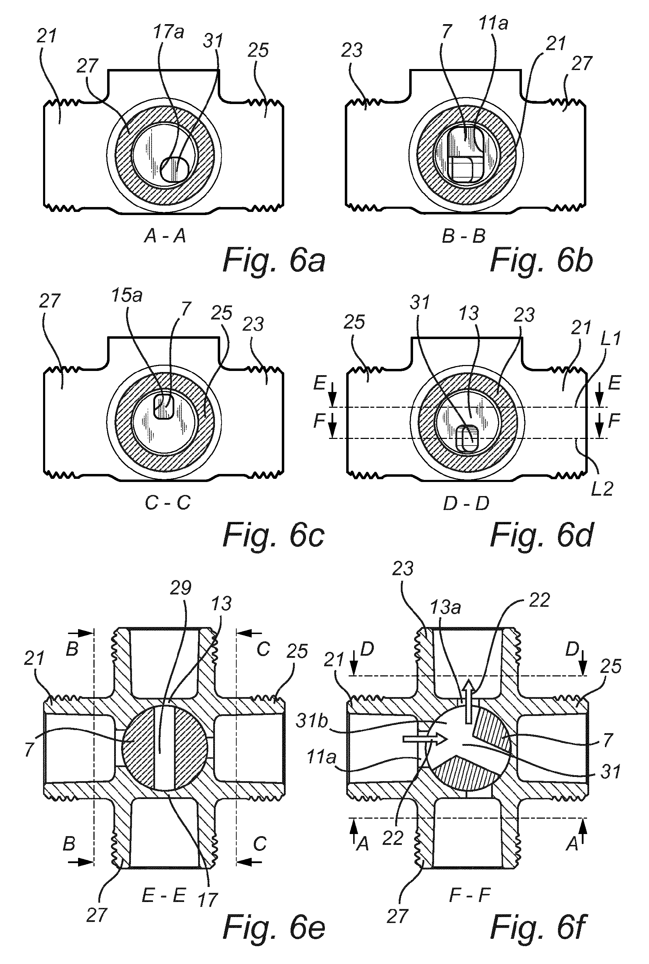

In Figs. 6a-6f the rotor 7 has been rotated 90° from the rotor position of the first operating state. In this fourth operating state the second fluid passage 31 is in fluid contact with each of the first and second port arrangement openings 11a, 13a. A fluid path between the first and second connecting conduits 21, 23 is thus established by the wide end 31 b of the second fluid passage 31, as illustrated by the arrows 22 in Fig. 6f. Hence, in this operating state the second fluid passage 31 provides for fluid communication between only two connecting conduits 21, 23 since the third port arrangement 15 is not open for contact with the second fluid passage 31. As shown in Fig. 6e, fluid flow through the valve 1 via the first fluid passage 29 is not possible in this operating state.

It will be appreciated that numerous variants of the embodiments described above are possible within the scope of the appended claims.

Hereinbefore is has been described that the valve 1 has separate fluid passages arranged at two different levels. It is appreciated that a valve according to the present disclosure may have separate fluid passages arranged at three or more different levels.

Furthermore, the number of port arrangements may be four, as described hereinbefore with reference to Fig. 1, or three, or exceed the number of four.

## Claims

1. Fluid control valve comprising
a valve chamber (5) having at least a first, a second and a third port arrangement (11, 13, 15) distributed around a circumferential chamber wall (19) of the valve chamber (5),
at least three connecting conduits (21, 23, 25, 27), each of which is fluidly connected to the valve chamber (5) by a respective one of said port arrangements (11, 13, 15), and
a rotor (7) which is rotatably seated inside the valve chamber (5) and rotatable around a rotor center axis (10),
**characterized in that**
the rotor (7) comprises a first fluid passage (29) arranged at a first level (L1) as seen along the rotor center axis (10), and
a second fluid passage (31) which is separated from the first fluid passage (29) and arranged at a second level (L2) as seen along the rotor center axis (10), wherein said second level (L2) is different from said first level (L1).

2. Fluid control valve according to claim 1, wherein one (13) of said port arrangements (11, 13, 15) is blocked for fluid communication with said first fluid passage (29) and open for fluid communication with said second fluid passage (31).

3. Fluid control valve according to any of the preceding claims, wherein one (15) of said port arrangements (11, 13, 15) is blocked for fluid communication with said second fluid passage (31) and open for fluid communication with said first fluid passage (29).

4. Fluid control valve according to any of the preceding claims, wherein one (11) of said port arrangements (11, 13, 15) is open for fluid communication with each of said first and second fluid passages (29, 31).

5. Fluid control valve according to any of the preceding claims, wherein one (31) of said first and second fluid passages (29, 31) is configured to enable fluid communication between at least three port arrangements (11, 13, 17) simultaneously.

6. Fluid control valve according to any of the preceding claims, wherein at least one (31) of said first and second fluid passages (29, 31) is configured to enable mixing of a first and a second flow of fluid.

7. Fluid control valve according to any of the preceding claims, wherein the valve (1) comprises a valve chamber (5) having at least four port arrangements (11, 13, 15, 17) distributed around a circumferential chamber wall (19) of the valve chamber (5) and at least four connecting conduits (21, 23, 25, 27) each of which is fluidly connected to the valve chamber (5) by a respective one of said four port arrangements (21, 23, 25, 27).
